# EUROPÄISCHE PATENTANMELDUNG

(11) **EP 2 067 644 A2**
(43) Veröffentlichungstag der Anmeldung: **10.06.2009**
(21) Anmeldenummer: 08020846.5
(22) Anmeldetag: 01.12.2008
(51) Int. Cl.: B60J 7/14

(54) **Fahrzeug mit einem umwandelbaren Dach**

(30) Priorität: 06.12.2007 DE 102007059035
(71) Anmelder: Webasto AG, 82131 Stockdorf (DE)
(72) Erfinder: Dintner, Thomas, 80995 München (DE)
(74) Vertreter: Wiese Konnerth Fischer Patentanwälte Partnerschaft

(57) **Zusammenfassung**

Die Erfindung betrifft ein Fahrzeug mit einem umwandelbaren Dach (2), das zumindest ein Dachteil (4, 5) aufweist, das mittels einer beidseits jeweils eine Lagereinheit aufweisenden Lagereinrichtung am Fahrzeug schwenkbar gelagert ist und mittels einer Antriebseinrichtung zwischen einer den Fahrzeuginnenraum überdeckenden Schließstellung und einer den Fahrzeuginnenraum freigebenden Ablagestellung, in der es in einem heckseitigen Ablageraum des Fahrzeugs abgesenkt ist, verstellbar ist. Erfindungsgemäß ist vorgesehen, dass die Antriebseinrichtung eine Antriebseinheit (25) aufweist, die einer der beiden seitlichen Lagereinheiten (15) zugeordnet ist, und dass eine Antriebswelle (28) die beiden sich gegenüberliegenden Lagereinheiten (15) verbindet und die Antriebskraft der einen Antriebseinheit (25) auch zur anderen der beiden Lagereinheiten (15) überträgt.

## Beschreibung

Die Erfindung betrifft ein Fahrzeug mit einem umwandelbaren Dach, das zumindest ein Dachteil aufweist, das mittels einer beidseits jeweils eine Lagereinheit aufweisenden Lagereinrichtung am Fahrzeug schwenkbar gelagert ist und mittels einer Antriebseinrichtung zwischen einer den Fahrzeuginnenraum überdeckenden Schließstellung und einer den Fahrzeuginnenraum freigebenden Ablagestellung, in der es in einem heckseitigen Ablageraum des Fahrzeugs abgesenkt ist, verstellbar ist.

Fahrzeuge oder Cabriolets mit einem umwandelbaren Dach oder einem Faltverdeck und mit einer Antriebsvorrichtung zum Verstellen des Daches zwischen einer Schließstellung und einer Offen- oder Ablagestellung in einem Ablageraum des Fahrzeugs sind allgemein bekannt. Eine derartige Antriebsvorrichtung weist an jedem zur vertikalen Fahrzeuglängsmittelebene symmetrischen Dachseitenbereich einen Antrieb oder eine Antriebseinheit auf, die einen jeweiligen seitlichen Lenker eine Lagereinrichtung des Daches zum Verstellen antreibt.

Beispielsweise enthält der "Mazda Miata" ein gegenüber der Karosserie verstellbares Hardtop-Dach mit einer beidseitigen Antriebsvorrichtung, die einen rechten und einen linken Elektroantrieb aufweist. Der "Alfa Romeo Spider" enthält beidseits jeweils einen Hydraulikzylinder zum Verstellen des Softtop-Faltverdecks. Schließlich weist der "BMW Z4" beidseits jeweils einen hydraulischen Drehantrieb auf.

Zwei unabhängige Antriebe können jedoch eine ungleichmäßige Antriebsbewegung bereitstellen. So müssen zwei Elektroantriebe mit einer zusätzlichen elektronischen Steuerung getaktet werden, da sie ansonsten gegeneinander arbeiten können, wodurch die Lebensdauer beider Antriebe herabgesetzt werden kann.

Zwei Hydraulikzylinder können durch unterschiedliche Längen der Hydraulikleitungen mit unterschiedlichen Mengen an Hydrauliköl beim Start der Bewegung beaufschlagt werden. Damit ist ein hydraulischer Gleichlauf des rechten und des linken Antriebs nicht gegeben.

Die WO 2006/039911 A1 offenbart ein Fahrzeug mit einem umwandelbaren Dach, das ein vorderes Dachteil und ein hinteres Dachteil aufweist, die zwischen einer den Fahrzeuginnenraum überdeckenden Schließstellung und einer den Fahrzeuginnenraum freigebenden Ablagestellung, in der sie in einem heckseitigen Ablageraum des Fahrzeugs abgesenkt sind, verstellbar sind. Das vordere Dachteil und das hintere Dachteil sind mittels jeweiliger Lagereinrichtungen an einem karosserieseitigen Hauptlager schwenkbar gelagert und können beim Verstellen in die Ablagestellung in reiner Schwenkbewegung um eine jeweilige feststehende Schwenkachse mit ihren Oberseiten nach unten umschwenken. Auch bei diesem Dach ist beidseits jeweils ein eigener Antrieb vorgesehen.

Wenn aus Kostengründen auf einen von zwei Antrieben verzichtet werden soll und nur ein einseitiger Antrieb vorgesehen ist, kann durch die Trägheit des Daches mit seiner Lagereinrichtung ebenfalls ein verzögertes bzw. ungleichförmiges Bewegungsverhalten der beidseitigen Lagereinheiten auftreten. Dies tritt auch dann auf, wenn die angetriebene Lagereinheit direkt angetrieben wird. Die Krafteinleitung ist nur einseitig und damit werden die zwischen den Lagereinheiten angeordneten Dachbauteile auf Torsion belastet. Zum Aufnehmen der Torsionsbelastung müssen die entsprechenden Dachbauteile wie z. B. eine Tragstruktur oder eine Dachschale des Dachteils steifer gebildet werden, wodurch üblicherweise ein höheres Bauteilgewicht und höhere Kosten entstehen.

Der Erfindung liegt die Aufgabe zugrunde, ein eingangs genanntes Fahrzeug zu schaffen, dessen Dach eine vereinfachte und verbesserte Antriebsvorrichtung aufweist.

Die Aufgabe wird bei dem oben genannten Fahrzeug erfindungsgemäß dadurch gelöst, dass die Antriebseinrichtung eine einzige Antriebseinheit aufweist, die einer der beiden seitlichen Lagereinheiten zugeordnet ist, und dass eine Antriebswelle die beiden sich gegenüberliegenden Lagereinheiten verbindet und die Antriebskraft der einen Antriebseinheit auch zur anderen der beiden Lagereinheiten überträgt.

Vorteilhafte Ausgestaltungen der Erfindung sind in den Unteransprüchen angegeben.

Die Antriebswelle ermöglicht die gleichmäßige spielfreie Verteilung der an einer der beiden Lagerseiten erzeugten und eingeleiteten Antriebskraft auf die beiden Lagerseiten des bewegbaren Dachteils. Durch die beidseitige gleichmäßige Antriebskrafteinleitung wird in das Dachteil keine Torsionsbelastung eingeleitet, wenn es zwischen seiner Schließstellung und seiner Offenstellung verstellt oder verschwenkt wird. Das Dachteil, das eine derartige Belastung nicht aufnehmen muss, kann somit einfacher und mit geringerer Steifigkeit gestaltet werden.

Des weiteren benötigt diese eine Antriebseinheit einen geringeren Einbauraum und ihre Einbaulage kann platzsparend nahe an der Ablagestellung des zumindest einen ablegbaren Dachteils sein. Die seitliche Anordnung der Antriebseinheit lässt einen Mittelbereich zwischen den seitlichen Lagereinheiten frei.

Eine derartige erfindungsgemäße Antriebseinrichtung mit der einseitigen Antriebseinheit und der Antriebswelle kann grundsätzlich bei beliebigen Hardtopdächern und Klapp- oder Faltverdecken angewendet werden.

Zweckmäßigerweise ist die Antriebswelle beidseits jeweils mit einem Zahnrad drehfest gekoppelt, das der jeweiligen seitlichen Lagereinheit zugeordnet ist. Jedoch können auch andere kraftübertragende Elemente vorgesehen sein.

Eine platzsparende Gestaltung sieht vor, dass das Zahnrad koaxial zur Drehachse eines Lagerarms des verschwenkbaren Dachteils ist.

Zweckmäßigerweise enthält das Dach ein vorderes Dachteil und ein hinteres Dachteil, die zwischen einer den Fahrzeuginnenraum überdeckenden Schließstellung und einer den Fahrzeuginnenraum freigebenden Ablagestellung, in der sie in einem heckseitigen Ablageraum des Fahrzeugs abgesenkt sind, verstellbar sind. Grundsätzlich kann die Antriebseinheit an die Lagereinheit jedes Dachteils unmittelbar oder mittelbar angekoppelt sein und die Antriebswelle kann auch mit jedem Dachteil unmittelbar oder mittelbar gekoppelt sein.

Besonders vorteilhaft ist es, wenn die Schwenkbewegungen der beiden Dachteile zwischen der Schließstellung und der Ablagestellung simultan erfolgen. Dann können die beiden Dachteile mit nur einer Antriebseinrichtung gekoppelt sein, wodurch sowohl der Beginn wie auch das Ende der Schwenkbewegungen der beiden Dachteile gleichzeitig erfolgen können. Bei dieser Gestaltung kann auf eine aufwändige Steuerungseinrichtung verzichtet werden. Eine Fehlfunktion mit möglicher Kollisionsgefahr der beiden Dachteile wird dadurch vermieden.

Wenn die beiden parallelen Schwenkachsen der Dachteile voneinander beabstandet sind, kann in Abhängigkeit der Gestaltung des Daches und des Fahrzeugs eine optimierte Positionierung der Dachteile für die Ablagebewegung auch für unterschiedliche Anordnungen der Dachteile festgelegt werden. Grundsätzlich ist jedoch auch eine koaxiale Anordnung der beiden Schwenkachsen möglich. Zweckmäßigerweise ist die Schwenkachse des vorderen Dachteils vor der Schwenkasche des hinteren Dachteils und insbesondere oberhalb der hinteren Schwenkachse angeordnet, um eine einfache kollisionsfreie Ablagebewegung zu gewährleisten. Bevorzugt ist die Schwenkachse des vorderen Dachteils unterhalb des Mittelabschnitts des hinteren Dachteils und die Schwenkachse des hinteren Dachteils ist unterhalb des Hinterrandbereichs des hinteren Dachteils angeordnet.

Grundsätzlich sind die Schwenkachsen derart angeordnet, dass im Ablageraum das vordere Dachteil über dem hinteren Dachteil angeordnet ist, so dass zunächst das hintere Dachteil und danach das vordere Dachteil in den Ablageraum einschwenken.

Der Schwenkwinkel des vorderen Dachteils und des hinteren Dachteils liegt im Bereich von etwa 180°, wenn die beiden Dachteile in Schließstellung in etwa horizontal ausgerichtet sind und im Ablageraum in umgeschwenkter Stellung gleichfalls in etwa horizontal angeordnet sind. Bei hiervon abweichender Gestaltung kann selbstverständlich der Schwenkwinkel dementsprechend abweichen.

Eine besonders bevorzugte und einfache Gestaltung sieht vor, dass die Lagereinrichtungen des vorderen Dachteils und des hinteren Dachteils feste Abstützungen des jeweiligen Dachteils am zugeordneten karosserieseitigen Schwenklager aufweisen, wobei die feste Abstützung jedes Dachteils z. B. mittels beidseits am Dachteil fest angebrachter Lager- oder Stützarme erfolgt, die am Schwenklager abgestützt sind. Jedoch können die Dachteile auch integral geformte Lagerabschnitte aufweisen.

Eine einfache bevorzugte Gestaltung sieht vor, dass die Lagereinrichtung jedes Dachteils ein Zahnrad oder ein Zahnsegment aufweist, das am Schwenklager angeordnet ist und mit der Lagereinrichtung bzw. dem Dachteil drehfest verbunden ist, und dass die Antriebseinrichtung zum Verstellen der beiden Dachteile mittels mindestens eines Antriebszahnrades mit beiden Zahnrädern oder den Zahnsegmenten gleichzeitig in Antriebseingriff ist. Diese mechanische Kopplung kann bei kleinem Bauraum die erforderlichen Antriebskräfte übertragen.

Andererseits können die Lagereinrichtungen der beiden Dachteile auch über Lenkergetriebe oder Koppellenker mit der Antriebseinrichtung zum Verstellen der beiden Dachteile gekoppelt sein.

Die Antriebseinrichtung zum Verstellen der beiden Dachteile kann einen Hydraulikzylinder, einen Elektromotor oder auch andere geeignete Antriebe aufweisen. Der Hydraulikzylinder kann über Koppellenker oder über ein rotatorisches Element wie z. B. ein Zahnrad oder ein Zahnsegment mit den Lagereinrichtungen der beiden Dachteile gekoppelt sein.

Die beiden Dachteile enthalten bevorzugt feste Dachschalen, können grundsätzlich auch Rahmenkonstruktionen mit einer Bespannung oder Mischformen sein.

Zweckmäßigerweise ist ein Deckel des Ablageraums oder Verdeckkastendeckel im Bereich seines Hinterrandes am Fahrzeug schwenkbar gelagert und vor dem Verschwenken der Dachteile mit seinem Vorderrand in eine Öffnungsstellung hochschwenkbar.

Nachfolgend wird das Fahrzeug anhand eines Ausführungsbeispiels unter Bezugnahme auf die Zeichnung näher erläutert. Es zeigt:
- Fig. 1: in einer Seitenansicht in schematischer Teildarstellung ein Fahrzeug mit einem in Schließstellung angeordneten Hardtop-Dach, das ein vorderes Dachteil und ein hinteres Dachteil enthält;
- Fig. 2: in einer Seitenansicht in schematischer Teildarstellung das Fahrzeug mit geschlossenem Dach und einem angehobenen Deckel eines Ablageraums für das Dach;
- Fig. 3: in einer Seitenansicht in schematischer Teildarstellung das Fahrzeug mit angehobenem Deckel, wobei die beiden Dachteile in einer verschwenkten Zwischenstellung beim Ablegen in den Ablageraum dargestellt sind;
- Fig. 4: in einer Seitenansicht in schematischer Teildarstellung das Fahrzeug mit angehobenem Deckel und in den Ablageraum eingeschwenkten Dachteilen;
- Fig. 5: in einer Seitenansicht in schematischer Teildarstellung das Fahrzeug mit in den Ablageraum eingeschwenkten Dachteilen und wieder abgesenktem und die Dachteile im Ablageraum abdeckendem Deckel; und
- Fig. 6: in einer perspektivischen Draufsicht das Fahrzeugdach mit einer Antriebseinrichtung, die nur an einer Lagerseite des Daches einen Antriebsmotor aufweist.

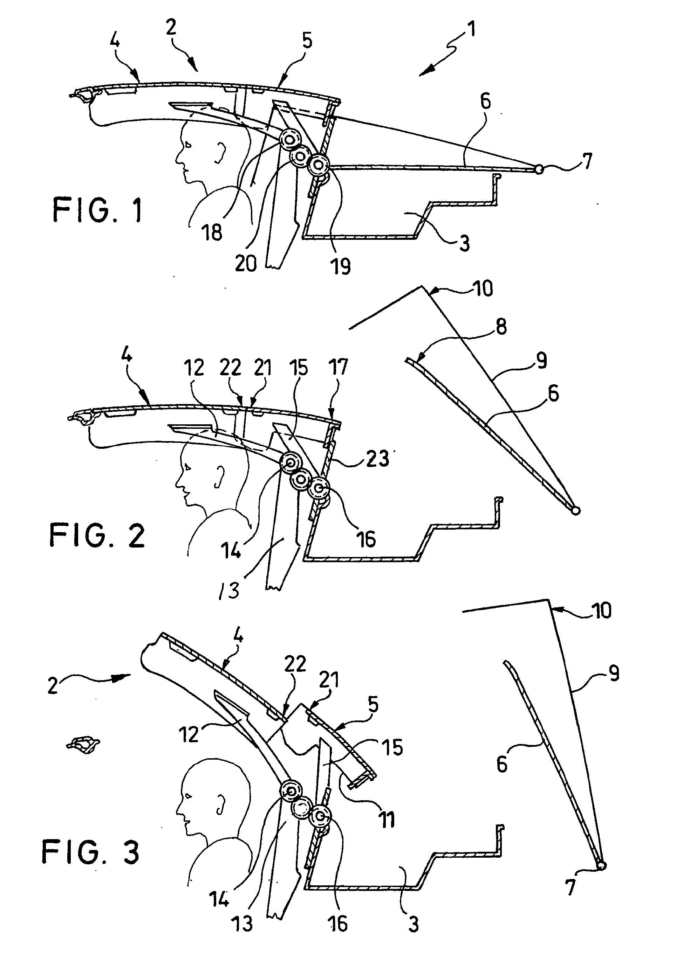

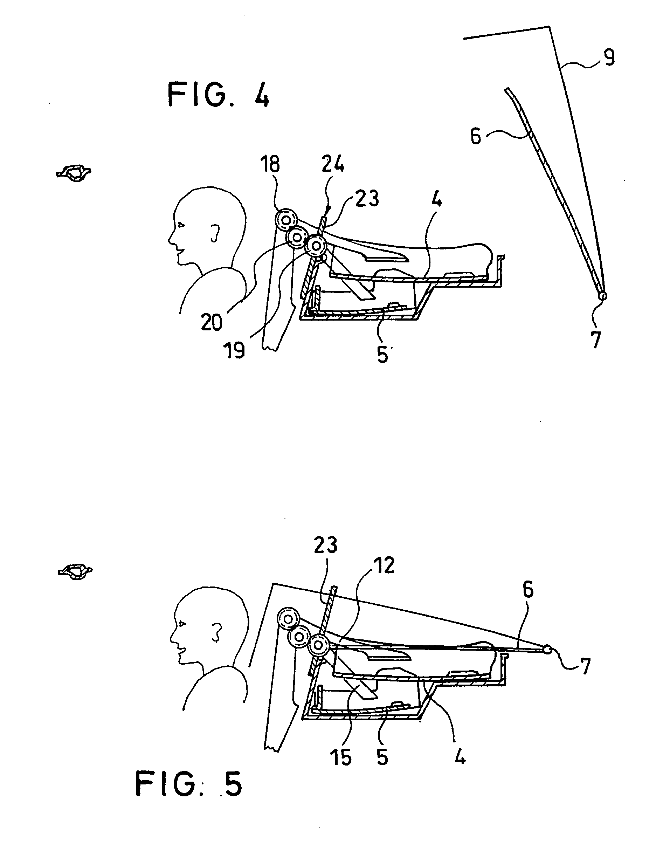

Ein Cabriolet-Fahrzeug 1 enthält (siehe Fig. 1) ein bewegbares und zum Öffnen absenkbares Dach 2, das zwischen einer den Fahrzeuginnenraum überdeckenden Schließstellung (Fig. 1 und 5) und einer Offenstellung (Fig. 5), in der es in einem heckseitigen Ablageraum oder Verdeckkasten 3 abgelegt ist, verstellbar ist. Das Dach 2 ist gemäß dem dargestellten Ausführungsbeispiel ein bewegbares Hardtop mit einem vorderen Dachteil 4 und einem hinteren Dachteil 5, die in Schließstellung hintereinander angeordnet sind und als starre Dachschalen gebildet sind. Grundsätzlich kann das Dach auch ein Softtopdach sein, bei dem das vordere und das hintere Dachteil einen jeweiligen oder einen gemeinsamen Verdeckstoff tragen, oder das Dach ist eine Mischform aus Hardtopdach und Softtopdach.

An das in Schließstellung des Daches 2 hintere Dachteil 5 schließt sich ein Deckel 6 des Ablageraums 3 an, der mittels einer Lagereinrichtung (nicht dargestellt) um eine hintere Schwenkachse 7 schwenkbar gelagert ist und mit seinem Vorderrand 8 zum Freigeben einer Durchtrittsöffnung für das Dach 2 um diese Schwenkachse 7 hochgeschwenkt wird, so dass das Dach 2 in den Ablageraum 3 eingeschwenkt bzw. aus ihm ausgeschwenkt werden kann. Die Schwenkachse 7 kann an der Karosserie festgelegt sein und z. B. durch ein Gelenk in Form eines Scharniers gebildet sein oder sie ist z. B. durch ein Vier- oder Mehrgelenk gebildet und verlagert sich beim Verschwenken des Deckels 6 relativ zur Karosserie.

Der Deckel 6 des Ablageraums 3 weist zwei sich seitlich längs erstreckende und nach oben ragende Finnen 9 auf, die bei geschlossenem Dach 2 jeweils mit ihrem Vorderabschnitt 10 seitlich am hinteren Dachteil 5 anliegen, beispielsweise am eine seitliche Ausnehmung 11 des hinteren Dachteils 5 begrenzenden Rand, und bei geschlossenem hinteren Dachteil 5 gegenüber diesem verschwenkt werden können.

Das vordere Dachteil 4 ist mittels einer nach hinten ragende Verlängerung oder eines jeweiligen seitlichen Lagerarms 12, der am vorderen Dachteil 4 angebracht ist und sich von diesem nach hinten erstreckt, an einem karosserieseitigen Hauptlager 13 um eine bezüglich des Fahrzeugs in Querrichtung horizontal verlaufende Schwenkachse 14 mittels eines Schwenklagers schwenkbar gelagert. Die Schwenkachse 14 ist bevorzugt unter dem hinteren Dachteil 5 und insbesondere etwa mittig unter dem hinteren Dachteil 5 angeordnet. Das Hauptlager 13 ist ein Teil einer festen Fahrzeugstruktur, die bei einem zweisitzigen Fahrzeug seitlich neben oder hinter den Sitzen angeordnet ist und etwa bis in Höhe der Kopfstützen reicht.

Ein derartiges Hauptlager 13 ist in bekannter Weise auf jeder der beiden Fahrzeugseiten angeordnet. Die Beschreibung des im wesentlichen symmetrisch zur vertikalen Fahrzeuglängsmittelebene aufgebauten Fahrzeugdaches wie auch seiner Lagerung erfolgt anhand der Einrichtungen oder der Lagereinheit an der linken Fahrzeugseite.

Das hintere Dachteil 5 ist gleichfalls mittels jeweils eines Lagerarms 15 im Bereich seiner beiden gegenüberliegenden Seitenränder um eine bezüglich des Fahrzeugs in Querrichtung horizontal verlaufende Schwenkachse 16 schwenkbar gelagert, wobei ein die Schwenkachse 16 bildendes Schwenkgelenk ebenfalls an dem karosserieseitigen Hauptlager 13 oder einer anderen fahrzeugfesten Struktur angeordnet ist. Die Schwenkachse 16 ist bevorzugt in etwa unter dem Hinterrandbereich 17 des in Schließstellung angeordneten hinteren Dachteils 5 und bezüglich der Fahrzeuglängsrichtung sowohl hinter der Schwenkachse 14 des vorderen Dachteils 4 wie auch unterhalb dieser Schwenkachse 14 angeordnet. Die beiden Schwenkachsen 14 und 16 sind bei diesem Ausführungsbeispiel in einem solchen Abstand voneinander angeordnet, dass ein Zahnrad 18, das am Schwenkgelenk des vorderen Dachteils 4 koaxial zur Schwenkachse 14 mit dem Lagerarm 12 drehfest verbunden ist, mit einem entsprechenden an dem Lagerarm 15 des hinteren Dachteils 5 fest angebrachten Zahnrads 19 über ein Antriebszahnrad 20 in ständigem Eingriff sind. Eine Rotation des Antriebszahnrades 20 verschwenkt somit gleichzeitig und in gekoppelter Bewegung sowohl das vordere Dachteil 4 wie auch das hintere Dachteil 5. Statt der beiden Zahnräder 18 und 19 können auch dem Schwenkweg angepasste Zahnsegmente verwendet werden.

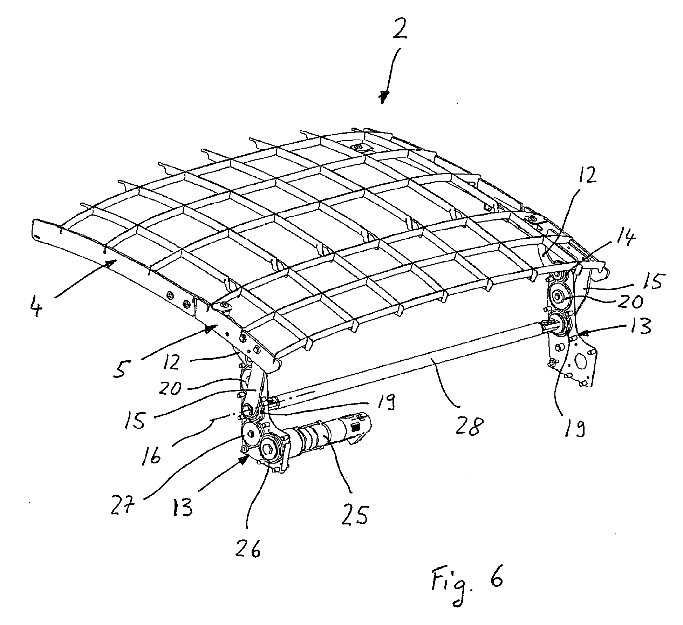

Als Antriebseinrichtung für das Antriebszahnrad 20 kann grundsätzlich gemäß dem Stand der Technik beidseits am Fahrzeug jeweils z. B. ein Elektromotor oder ein Hydraulikzylinder vorgesehen sein (in den Fig. 1 bis 5 nicht dargestellt), der unmittelbar oder über ein Getriebe oder Lenkergetriebe mit dem Antriebszahnrad 20 verbunden ist. Ein rotatorischer Hydraulikzylinder als Antriebseinrichtung bildet hierbei eine integrale Baueinheit mit dem Antriebszahnrad 20. Eine erfindungsgemäße Antriebseinrichtung für ein derartiges Dach wird nachfolgend anhand der Fig. 6 beschrieben.

Durch die in den Figuren schematisch dargestellte Anordnung der Schwenkachsen 14 und 16 der Lagerarme 12 bzw. 15 der beiden Dachteile 4 und 5 bewegt sich beim Öffnen des Daches 2 der Vorderrand 21 des hinteren Dachteils 5 vom Hinterrand 22 des vorderen Dachteils 4 weg (Fig. 3), so dass schon in der Anfangsphase der Öffnungsbewegung des Daches 2 keine Kollision zwischen den beiden Dachteilen 4 und 5 auftreten kann.

Die gleichzeitige, simultane Öffnungsbewegung der beiden Dachteile 4 und 5 (Bewegung des Daches 2 von Fig. 2 nach Fig. 4) läuft insbesondere auch synchron bzw. direkt gekoppelt ab, wobei die Verschwenkgeschwindigkeiten der beiden Dachteile 4 und 5 in einem festen Verhältnis zueinander stehen und insbesondere gleich oder annähernd gleich sind, wenn der Verschwenkweg der beiden Dachteile 4, 5 je nach Ausgestaltung des Daches 2 etwa eine halbe Umdrehung bzw. etwa 180° Grad beträgt. Im Ablageraum 3 liegt dann das vordere Dachteil 4 in umgeschwenkter Stellung mit seiner Oberseite nach unten weisend unter dem hinteren Dachteil 5, das gleichfalls umgeschwenkt ist und oberhalb des vorderen Dachteils 4 zu liegen kommt. Der Deckel 6 wird schließlich wieder herabgeschwenkt und deckt den das Dach 2 enthaltenden Ablageraum 3 ab (Fig. 5).

Statt einer Bewegungskopplung und -übertragung mittels der Zahnräder können auch Koppellenker oder Lenkergetriebe für die Bewegungskopplung der beiden Dachteile 4, 5 verwendet werden, die wiederum auch von linear wirkenden Antrieben antreibbar sind.

Das Fahrzeug weist eine Heckscheibe 23 auf, die an der Fahrzeugstruktur in etwa zwischen dem Hauptlager 13 und dem Ablageraum 3 im wesentlichen in vertikaler Ausrichtung fest angeordnet ist. Der Hinterrandbereich 17 des hinteren Dachteils 5 ist an die Kontur des Oberrandes 24 der Heckscheibe 23 angepasst und legt sich bei geschlossenem Dach 2 dicht gegen den Oberrand 24 der Heckscheibe 23 an. Beim Öffnen des Daches 2 schwenkt das hintere Dachteil 4 kollisionsfrei über die Heckscheibe 23. Die Heckscheibe 23 kann auch in alternativer Gestaltung an der Karosserie in vertikaler Richtung verstellbar gelagert sein.

Grundsätzlich kann an dem vorderen Dachteil 4 wie auch an dem hinteren Dachteil 5 noch ein zusätzliches Dachteil fest angebracht oder daran bewegbar gelagert und in insbesondere synchroner Ablagebewegung mit dem zugehörigen Dachteil verstellt werden, wobei auch hier zweckmäßigerweise die Antriebsbewegung von der einen Antriebseinrichtung abgeleitet wird.

Durch die einfache Lagerung der Dachteile mittels fester Bauteile wie den beschriebenen Lagerarmen, d. h. ohne die Dachteile haltende kinematische Einrichtungen wie Viergelenke oder dergleichen, ist ein einfaches mehrteiliges Hardtop-Dach geschaffen, das ohne großen Steuerungsaufwand in simultaner Bewegung seiner Dachteile und in reiner Schwenkbewegung um die Schwenkachsen abgelegt werden kann.

Fig. 6 zeigt das Fahrzeugdach 2 mit einer erfindungsgemäßen Antriebseinrichtung, die statt zwei beidseitig angeordneten Antriebseinheiten lediglich eine Antriebseinheit 25 an der linken Dach- oder Fahrzeugseite bzw. an der linken Lagereinheit des Daches 2 aufweist. Die Antriebseinheit 25, z. B. ein Elektro-Getriebemotor, ist an dem linken Hauptlager 13 angeordnet und über ein Zahnradgetriebe, das die beiden Zahnrädern 26 und 27 enthält, mit dem Zahnrad 19 der Lagereinheit bzw. des Lagerarms 15 des hinteren Dachteils 5 in Antriebsverbindung gekoppelt. Eine torsionssteife Antriebswelle 28 erstreckt sich zwischen den beiden sich gegenüberliegenden Hauptlagern 13, ist an diesen drehbar gelagert und beidseits mit dem jeweiligen Zahnrad 19 der Lagereinheit bzw. des Lagerarms 15 des hinteren Dachteils 5 drehfest verbunden. Damit wird die Antriebskraft der linksseitig angeordneten Antriebseinheit 25 spielfrei auf das rechtsseitige Zahnradgetriebe (Zahnräder 18, 19 und 20) übertragen.

Durch diese Gestaltung können die Kosten für eine zweite Antriebseinheit an der rechten Seite und/oder für eine elektronische Regelung eingespart werden. Die torsionssteife Antriebswelle 28 bildet ein Kraftverteilungselement, so dass die Belastungen über die linksseitigen und die rechtsseitigen Lager- und Antriebselemente in das hintere Dachteil 5 beidseitig eingeleitet werden. Das hintere Dachteil muss daher keine Torsionskräfte aufnehmen, wodurch es einfacher und leichter ausgelegt werden kann und damit kostengünstiger hergestellt werden kann.

Somit wird bei nur einem Antrieb eine rein mechanische Kopplung zwischen den linksseitigen und den rechtsseitigen Lager- und Antriebselementen in das hinteren Dachteils 5 erzielt. Hierdurch wird eine Trennung von Dachantrieb und Gleichlaufsteuerung ermöglicht (beide sind einzeln leichter abzustimmen). Des weiteren wird die Leitungsverlegung im Fahrzeug auf nur eine Fahrzeugseite reduziert, wodurch sich auch die Montagekosten verringern. Schließlich ergeben sich geringere Belastungen auf die angrenzenden Bauteile, wodurch eine Reduzierung der Bauteilkosten erzielt wird.

### Bezugszeichenliste

- 1: Cabriolet
- 2: Dach
- 3: Ablageraum
- 4: vorderes Dachteil
- 5: hinteres Dachteil
- 6: Deckel
- 7: Schwenkachse
- 8: Vorderrand
- 9: seitliche Finne
- 10: Vorderabschnitt
- 11: Ausnehmung
- 12: Lagerarm
- 13: Hauptlager
- 14: Schwenkachse
- 15: Lagerarm
- 16: Schwenkachse
- 17: Hinterrandbereich
- 18: Zahnrad
- 19: Zahnrad
- 20: Antriebszahnrad
- 21: Vorderrand
- 22: Hinterrand
- 23: Heckscheibe
- 24: Oberrand
- 25: Antriebseinheit
- 26: Zahnrad
- 27: Zahnrad
- 28: Antriebswelle

## Patentansprüche

1. Fahrzeug mit einem umwandelbaren Dach, das zumindest ein Dachteil (4, 5) aufweist, das mittels einer beidseits jeweils eine Lagereinheit (15) aufweisenden Lagereinrichtung am Fahrzeug schwenkbar gelagert ist und mittels einer Antriebseinrichtung zwischen einer den Fahrzeuginnenraum überdeckenden Schließstellung und einer den Fahrzeuginnenraum freigebenden Ablagestellung, in der es in einem heckseitigen Ablageraum (3) des Fahrzeugs abgesenkt ist, verstellbar ist,
**dadurch gekennzeichnet,**
**dass** die Antriebseinrichtung eine einzige Antriebseinheit (25) aufweist, die einer der beiden seitlichen Lagereinheiten (15) zugeordnet ist, und
**dass** eine Antriebswelle (28) die beiden sich gegenüberliegenden Lagereinheiten (15) verbindet und die Antriebskraft der einen Antriebseinheit (25) auch zur anderen der beiden Lagereinheiten (15) überträgt.

2. Fahrzeug nach Anspruch 1,
**dadurch gekennzeichnet, dass** die Antriebswelle (28) eine torsionssteife Verbindung zwischen den seitlichen Lagereinheiten (15) bildet.

3. Fahrzeug nach Anspruch 1 oder 2,
**dadurch gekennzeichnet, dass** die Antriebswelle (28) beidseits jeweils mit einem Zahnrad (19) drehfest gekoppelt ist, das der jeweiligen seitlichen Lagereinheit (15) zugeordnet ist.

4. Fahrzeug nach Anspruch 3,
**dadurch gekennzeichnet, dass** das Zahnrad (19) koaxial zur Drehachse (16) eines Lagerarms (15) des verschwenkbaren Dachteils (5) ist.

5. Fahrzeug nach einem der Ansprüche 1 bis 4,
**dadurch gekennzeichnet, dass** die Antriebswelle (28) beidseits an einem jeweiligen Hauptlager (13) drehbar gelagert ist.

6. Fahrzeug nach einem der Ansprüche 1 bis 5,
**dadurch gekennzeichnet, dass** das vordere Dachteil (4) und das hintere Dachteil (5) mittels jeweiliger Lagereinrichtungen (12, 15) an einem jeweiligen karosserieseitigen Hauptlager (13) schwenkbar gelagert sind und beim Verstellen in die Ablagestellung in reiner Schwenkbewegung um eine jeweilige feststehende Schwenkachse (14 bzw. 16) mit ihren Oberseiten nach unten umschwenken.

7. Fahrzeug nach Anspruch 6,
**dadurch gekennzeichnet, dass** die Schwenkbewegungen der beiden Dachteile (4, 5) zwischen der Schließstellung und der Ablagestellung simultan erfolgen.

8. Fahrzeug nach einem der Ansprüche 1 bis 7,
**dadurch gekennzeichnet, dass** die beiden parallelen Schwenkachsen (14, 16) der Dachteile (4, 5) voneinander beabstandet sind.

9. Fahrzeug nach einem der Ansprüche 1 bis 8,
**dadurch gekennzeichnet, dass** die Schwenkachse (14) des vorderen Dachteils (4) vor der Schwenkachse (16) des hinteren Dachteils (5) und insbesondere oberhalb der hinteren Schwenkachse (16) angeordnet ist.

10. Fahrzeug nach einem der Ansprüche 1 bis 9,
**dadurch gekennzeichnet, dass** die Schwenkachsen (14, 16) derart angeordnet sind, dass im Ablageraum (3) das vordere Dachteil (4) über dem hinteren Dachteil (5) angeordnet ist.

11. Fahrzeug nach einem der Ansprüche 1 bis 10,
**dadurch gekennzeichnet, dass** die Lagereinrichtungen des vorderen Dachteils (4) und des hinteren Dachteils (5) feste Abstützungen (12, 15) des jeweiligen Dachteils (4, 5) am zugeordneten karosserieseitigen Schwenklager aufweisen.

12. Fahrzeug nach Anspruch 11,
**dadurch gekennzeichnet, dass** die feste Abstützung jedes Dachteils (4, 5) mittels beidseits am Dachteil fest angebrachter Lager- oder Stützarme (12, 15) erfolgt, die am Schwenklager abgestützt sind.

13. Fahrzeug nach einem der Ansprüche 1 bis 12,
**dadurch gekennzeichnet, dass** die Lagereinrichtung jedes Dachteils (4, 5) ein Zahnrad (18, 19) oder Zahnsegment aufweist, das am Schwenklager angeordnet ist und mit der Lagereinrichtung bzw. dem Dachteil (4, 5) drehfest verbunden ist, und dass die Antriebseinheit (25) zum Verstellen der beiden Dachteile (4, 5) mittels mindestens eines Antriebszahnrades (20) mit beiden Zahnrädern (18, 19) oder Zahnsegmenten gleichzeitig in Antriebseingriff ist.

14. Fahrzeug nach einem der Ansprüche 1 bis 13,
**dadurch gekennzeichnet, dass** die Lagereinrichtungen der beiden Dachteile (4, 5) über Lenkergetriebe oder Koppellenker mit der Antriebseinheit (25) zum Verstellen des zumindest einen Dachteils (4, 5) gekoppelt ist.

15. Fahrzeug nach einem der Ansprüche 1 bis 14,
**dadurch gekennzeichnet, dass** die Antriebseinheit (25) einen Hydraulikzylinder oder einen Elektromotor aufweist.
